# EUROPEAN PATENT APPLICATION

(11) **EP 3 842 279 A1**
(43) Date of publication of application: **30.06.2021**
(21) Application number: 19219233.4
(22) Date of filing: 23.12.2019
(51) Int. Cl.: B60L 53/16, B60L 3/04, B60L 53/66, B60L 53/62

(54) **VEHICLE CHARGING APPARATUS, CHARGING STATION, AND METHOD OF CHARGING AN ELECTRIC VEHICLE**

(71) Applicant: Vestel Elektronik Sanayi ve Ticaret A.S., 45030 Manisa (TR)
(72) Inventor: BILGIN, Mert Serdar, 45030 Manisa (TR)
(74) Representative: Maikowski & Ninnemann Patentanwälte Partnerschaft mbB

(57) **Abstract**

The present disclosure relates to a vehicle charging apparatus (100). The vehicle charging apparatus (100) includes a power outlet (110) configured for a connection with an electric vehicle (10) for charging; at least one monitoring unit (120) configured to monitor a charging operation; and a mechanical separator unit (130) configured to mechanically disconnect the power outlet (110) from the electric vehicle (10) if the at least one monitoring unit (120) detects a fault in the charging operation.

## Description

### FIELD

Embodiments of the present disclosure relate to a vehicle charging apparatus, a charging station having the vehicle charging apparatus, and a method of charging an electric vehicle. Embodiments of the present disclosure particularly relate to a fault protection system for a charging operation.

### BACKGROUND

Vehicles with electric drive (especially hybrid or electric vehicles) include electric energy storage devices (e.g. batteries) that can be connected to a charging station and charged. Various charging technologies can be used to charge the electric energy storage devices of such electric vehicles. In AC charging, the charger that converts the direct current to charge the electric energy storage devices is located in the vehicle. In DC charging, the charger that converts the direct current to charge the electric energy storage devices is located in the charging station.

There are two main communication protocols used to communicate between electric vehicles and DC current charging stations. These are CAN (Controller Area Network) and PLC (Power Line Communication). These protocols have their own standards to communicate with electric vehicles. According to those standards, if there is a communication error or malfunction, then the charging operation should end. For this reason, both sides have an integrated relay system to cut off an energy flow. However, the relay systems can be broken and welded.

In view of the above, new vehicle charging apparatuses, charging stations having the vehicle charging apparatus, and methods of charging an electric vehicle that overcome at least some of the problems in the art are beneficial.

### SUMMARY

In light of the above, a vehicle charging apparatus, a charging station having the vehicle charging apparatus, and a method of charging an electric vehicle are provided.

It is an object of the present disclosure to provide a fail-safe protection if a fault occurs in a charging operation of an electric vehicle. Further objects, aspects, benefits, and features of the present disclosure are apparent from the claims, the description, and the accompanying drawings.

According to an independent aspect of the present disclosure, a vehicle charging apparatus is provided. The vehicle charging apparatus includes a power outlet configured for a connection with an electric vehicle for charging; at least one monitoring unit configured to monitor a charging operation; and a mechanical separator unit configured to mechanically disconnect the power outlet from the electric vehicle if the at least one monitoring unit detects a fault in the charging operation.

According to another independent aspect of the present disclosure, a charging station is provided. The charging station includes the vehicle charging apparatus according to the embodiments described herein.

According to another independent aspect of the present disclosure, a method of charging an electric vehicle is provided. The method includes a monitoring of a charging operation of an electric vehicle using at least one monitoring unit; and if a fault in the charging operation is detected, mechanically disconnecting a power outlet from the electric vehicle.

Embodiments are also directed at devices for carrying out the disclosed methods and include device parts for performing each described method aspect. These method aspects may be performed by way of hardware components, a computer programmed by appropriate software, by any combination of the two or in any other manner. Furthermore, embodiments according to the disclosure are also directed at methods for operating the described apparatus. The methods include method aspects for carrying out every function of the apparatus.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a schematic diagram of a vehicle charging apparatus according to various embodiments described herein;
- FIG. 2A and B: show side views of a vehicle charging apparatuses according to embodiments described herein; and
- FIG. 3: shows a flowchart of a method of charging an electric vehicle to various embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Vehicles with electric drives include electric energy storage devices that can be connected to a charging station for charging. There are two main communication protocols used to communicate between electric vehicles and DC current charging stations. These are CAN (Controller Area Network) and PLC (Power Line Communication). According to those standards, if there is a communication error or malfunction, then the charging operation should end. For this reason, both sides have an integrated relay system to cut off an energy flow. However, the relay systems can be broken and welded.

The embodiments of the present disclosure overcome the above drawbacks by providing the mechanical separator unit which mechanically disconnects the power outlet from the electric vehicle if a fault is detected. Accordingly, a reliable fault detection system is provided which is operable even if the the relay systems on the charging station side and/or the vehicle side are broken and welded.

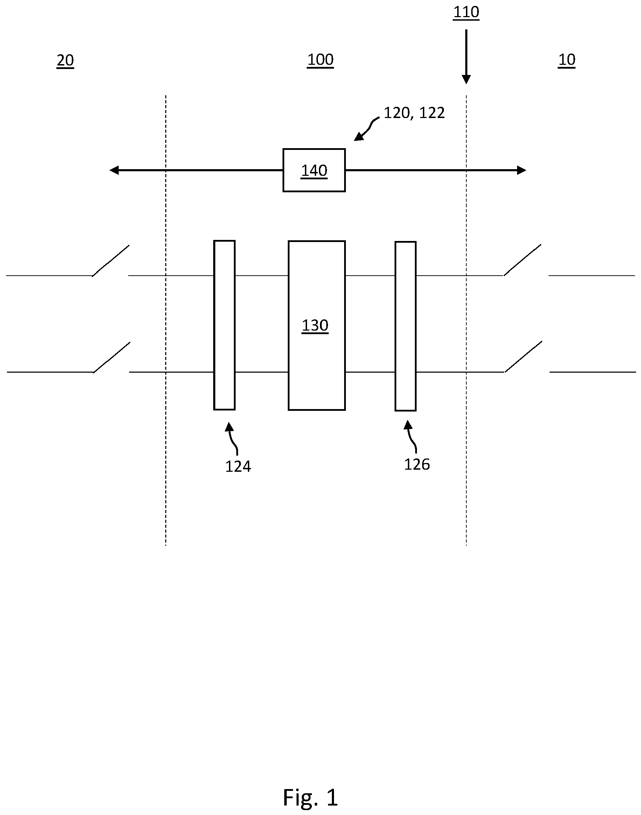

FIG. 1 shows a schematic diagram of a vehicle charging apparatus 100 according to various embodiments described herein.

The vehicle charging apparatus 100 includes a power outlet 110 configured for a connection with an electric vehicle 10 for charging; at least one monitoring unit 120 configured to monitor a charging operation; and a mechanical separator unit 130 configured to mechanically disconnect the power outlet 110 from the electric vehicle 10 if the at least one monitoring unit 120 detects a fault in the charging operation.

The vehicle charging apparatus 100 can be connected to, or included in, a charging station 20.

The electric vehicle 10 can be a pure electric vehicle (BEV) or a plug-in hybrid vehicle (PHEV). The term "vehicle" includes passenger cars, trucks, buses, campers, motorcycles, etc., which are used to transport people, goods, etc. In particular, the term includes vehicles for passenger transport.

According to some embodiments, which can be combined with other embodiments described herein, the least one monitoring unit 120 includes a communication monitoring unit 122 configured to monitor a communication between the charging station 20 and the electric vehicle 10 during the charging operation.

Additionally, or alternatively, the least one monitoring unit 120 includes a voltage sensor unit 124 configured to monitor a charging voltage during the charging operation. Additionally, or alternatively, the least one monitoring unit 120 includes a current sensor unit 126 configured to monitor a charging current during the charging operation.

The communication monitoring unit 122, the voltage sensor unit 124, and the current sensor unit 126 can be used individually or in combination to detect a fault in the charging operation.

According to some embodiments, which can be combined with other embodiments described herein, the vehicle charging apparatus 100 includes a microcontroller 140 (e.g. MCU) configured to control the mechanical separator unit 130 based on the monitoring provided by the at least one monitoring unit 120.

According to some embodiments, which can be combined with other embodiments described herein, the mechanical separator unit 130 is configured to mechanically separate the power outlet 110 from a power inlet of the electric vehicle. For example, the mechanical separator unit 130 is configured to mechanically and/or electronically break one or more power lines, as it is illustrated in the example of FIG. 1.

Further, in some implementations, the microcontroller 140 may include at least the communication monitoring unit 122 configured to monitor a communication between the charging station 20 and the electric vehicle 10 during the charging operation

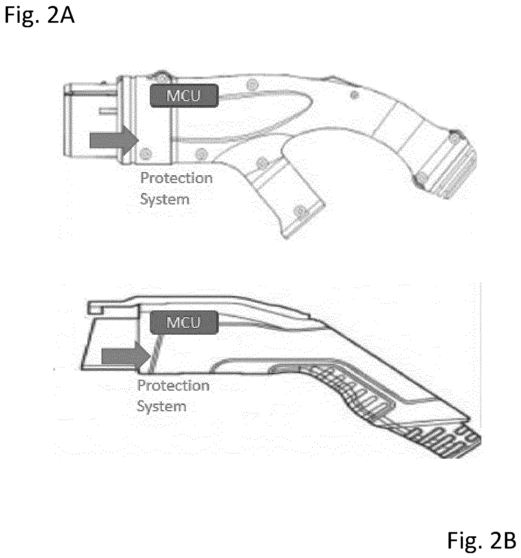

FIG. 2A and B show side views of a vehicle charging apparatuses according to embodiments described herein.

According to some embodiments, which can be combined with other embodiments described herein, the vehicle charging apparatus is a socket. The socket may be Chademo (FIG. 2A) or CCS (FIG. 2B) socket.

In some implementations, the mechanical separator unit, which may bei included in the socket, is configured to mechanically disconnect the socket from a plug of the electric vehicle. For example, the mechanically disconnecting of the power outlet from the electric vehicle includes a retracting of electrical pins of the socket to mechanically disconnect the power outlet from the electric vehicle.

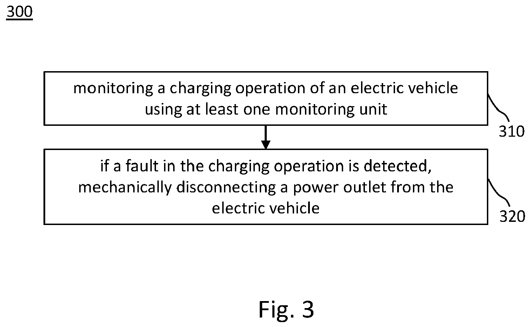

FIG. 3 shows a flowchart of a method 300 of charging an electric vehicle to various embodiments described herein.

The method 300 includes in block 310 a monitoring of a charging operation of an electric vehicle using at least one monitoring unit; and in block 320, if a fault in the charging operation is detected, mechanically disconnecting a power outlet from the electric vehicle.

In some implementations, the monitoring of the charging operation in block 310 includes a monitoring of at least one of a communication between a charging station and the electric vehicle, a charging voltage, and a charging current.

In some implementations, the mechanically disconnecting of the power outlet from the electric vehicle in block 320 includes a retracting of electrical pins to mechanically disconnect the power outlet from the electric vehicle.

The embodiments of the present disclosure provide a mechanical separator unit which mechanically disconnects the power outlet from the electric vehicle if a fault is detected. Accordingly, a reliable fault detection system is provided which is operable even if the the relay systems on the charging station side and/or the vehicle side are broken and welded.

While the foregoing is directed to embodiments of the disclosure, other and further embodiments of the disclosure may be devised without departing from the basic scope thereof, and the scope thereof is determined by the claims that follow.

## Claims

1. A vehicle charging apparatus (100), comprising:
a power outlet (110) configured for a connection with an electric vehicle (10) for charging;
at least one monitoring unit (120) configured to monitor a charging operation; and
a mechanical separator unit (130) configured to mechanically disconnect the power outlet (110) from the electric vehicle (10) if the at least one monitoring unit (120) detects a fault in the charging operation.

2. The vehicle charging apparatus (100) of claim 1, wherein the least one monitoring unit (120) includes a communication monitoring unit (122) configured to monitor a communication between a charging station (20) and the electric vehicle (10) during the charging operation.

3. The vehicle charging apparatus (100) of claim 1 or 2, wherein the least one monitoring unit (120) includes a voltage sensor unit (124) configured to monitor a charging voltage during the charging operation.

4. The vehicle charging apparatus (100) of any one of claims 1 to 3, wherein the least one monitoring unit (122) includes a current sensor unit (126) configured to monitor a charging current during the charging operation.

5. The vehicle charging apparatus (100) of any one of claims 1 to 4, further including a microcontroller (140) configured to control the mechanical separator unit (130) based on the monitoring provided by the at least one monitoring unit (120).

6. The vehicle charging apparatus (100) of any one of claims 1 to 5, wherein the mechanical separator unit (130) is configured to mechanically separate the power outlet (110) from a power inlet of the electric vehicle (10).

7. The vehicle charging apparatus (100) of any one of claims 1 to 6, wherein the mechanical separator unit (130) is configured to break one or more power lines.

8. The vehicle charging apparatus (100) of any one of claims 1 to 7, wherein the mechanical separator unit (130) is configured to retract electrical pins to mechanically disconnect the power outlet (110) from the electric vehicle (10).

9. The vehicle charging apparatus (100) of any one of claims 1 to 8, wherein the vehicle charging apparatus (100) is a socket.

10. The vehicle charging apparatus (100) of claim 9, wherein the mechanical separator unit (130) is configured to mechanically disconnect the socket from a plug of the electric vehicle (10).

11. A charging station (10, 20), comprising the vehicle charging apparatus (10) of any one of claims 1 to 10.

12. The charging station of claim 11, further including one or more output relays for connecting and disconnecting a power source to the vehicle charging apparatus (100).

13. Method (300) of charging an electric vehicle, comprising:
monitoring (310) a charging operation of an electric vehicle using at least one monitoring unit; and
if a fault in the charging operation is detected, mechanically disconnecting (320) a power outlet from the electric vehicle.

14. The method (300) of claim 13, wherein the monitoring of the charging operation includes a monitoring of at least one of a communication between a charging station and the electric vehicle, a charging voltage, and a charging current.

15. The method (300) of claim 13 or 14, wherein the mechanically disconnecting of the power outlet from the electric vehicle includes:
retracting electrical pins to mechanically disconnect the power outlet from the electric vehicle.
